# EUROPEAN PATENT APPLICATION

(11) **EP 4 821 724 A1**
(43) Date of publication of application: **14.10.2026**
(21) Application number: 26168986.3
(22) Date of filing: 30.03.2026
(51) Int. Cl.: B60K 1/04

(54) **BATTERY CASE MOUNTING SCRUCTURE**

(30) Priority: 11.04.2025 JP 2025065414
(71) Applicant: Suzuki Motor Corporation, Hamamatsu-shi, Shizuoka 432-8611 (JP)
(72) Inventor: MIKAMOTO, Takayuki, Hamamatsu-shi, 432-8611 (JP)
(74) Representative: Haseltine Lake Kempner LLP

(57) **Abstract**

A battery case mounting structure includes: paired side frames (6) extending in a front-back direction below a floor member (3) of an electric vehicle (1); a floor supporting member (17) supporting the floor member to the paired side frames (6); a battery case (7); and a plurality of side brackets supporting the battery case (7) between the paired side frames (6). The side brackets includes a side bracket (10) fixed to one (4) of the paired side frames (6) by being sandwiched between the one side frame (4) and the floor supporting member (17), and a side bracket (11) fixed to another (5) of the paired side frames (6) by being sandwiched between the other side frame (5) and the floor supporting member, thereby securing a minimum road clearance.

## Description

### BACKGROUND OF THE INVENTION

### Field of the Invention

The present invention relates to a battery case mounting structure.

### Description of the Related Art

As an electric vehicle including paired side frames extending in a front-back direction, a flat body-type small truck is known. There has been proposed a battery case mounting structure for mounting a battery case of a driving battery that supplies power to a traction motor of the electric vehicle, between the paired side frames.

Patent Document 1 (Japanese Patent Laid-Open No. 2014-69686) discloses a battery case mounting structure in which paired sub-frames corresponding to middle areas in a front-back direction, of paired side frames constituting a frame are provided on the paired side frames, and a battery case of a driving battery is mounted between paired side-frame structural bodies including the paired sub-frames.

In an existing electric vehicle in which the battery case of the driving battery is mounted between the paired side frames, it is demanded to dispose the battery case below a floor and to sufficiently secure a minimum road clearance. In a technique disclosed in Patent Document 1, a method of securing the minimum road clearance is not particularly described.

### SUMMARY OF THE INVENTION

The technique of the present disclosure has been made in consideration of the above-described circumstances, and an object of the technique of the present disclosure is to provide a battery case mounting structure that can sufficiently secure a minimum road clearance in a case where an electric vehicle has a form in which a battery case of a driving battery is mounted between paired side frames.

A battery case mounting structure according to the present disclosure includes paired side frames extending in a front-back direction below a floor member of an electric vehicle, a battery case of a driving battery supplying power to a traction motor of the electric vehicle, and a plurality of brackets configured to support the battery case between the paired side frames in plan view of the electric vehicle. Among the plurality of brackets, side brackets that are brackets overhanging from the battery case side in a vehicle width direction of the electric vehicle are fixed onto the side frames by being sandwiched between the side frames and a floor supporting member configured to support the floor member to the side frames.

According to the battery case mounting structure of the present disclosure, the electric vehicle has the form in which the battery case of the driving battery is mounted between the paired side frames, and can sufficiently secure the minimum road clearance.

### BRIEF DESCRIPTION OF THE DRAWINGS

Fig. 1 is a partial diagram illustrating an electric vehicle including a battery case mounting structure according to the present disclosure;
Fig. 2 is a diagram illustrating a state where a bracket for supporting a battery case is fixed to one of side frames in the electric vehicle illustrated in Fig. 1;
Fig. 3 is a partial enlarged view illustrating a mounting form of the bracket illustrated in Fig. 2;
Fig. 4 is a partial diagram illustrating the electric vehicle illustrated in Fig. 1 in a state where the deck floor panel of the deck is mounted;
Fig. 5 is a diagram illustrating arrangement of brackets for supporting the battery case in the electric vehicle illustrated in Fig. 1;
Fig. 6 is an enlarged view illustrating one of the brackets illustrated in Fig. 5;
Fig. 7 is a diagram illustrating the mounting form of the bracket illustrated in Fig. 3 in a state where the deck floor panel of the deck is removed; and
Fig. 8 is a diagram illustrating the electric vehicle illustrated in Fig. 1 in side view.

### DETAILED DESCRIPTION OF THE PREFERRED EMBODIMENT

In all drawings of the present application, a front-back direction of a vehicle is illustrated by a bidirectional arrow Fw-Bw, a left-right vehicle width direction of the vehicle is illustrated by a bidirectional arrow Lw-Rw, and an up-down direction of the vehicle is illustrated by a bidirectional arrow Uw-Dw. In addition, in all drawings, corresponding portions are denoted by the same reference numerals.

A battery case mounting structure according to one aspect of the present disclosure is described with reference to the drawings.

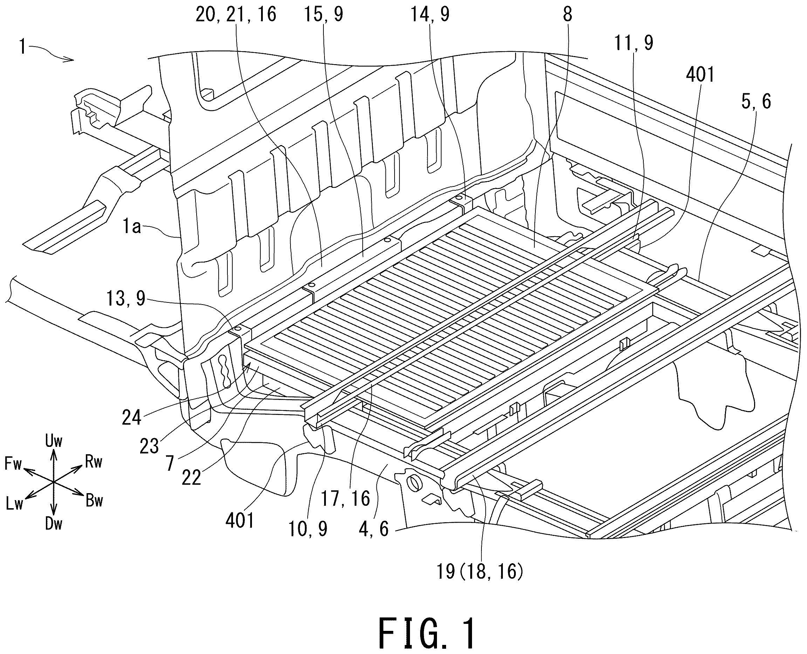

Fig. 1 is a partial perspective view illustrating an electric vehicle including the battery case mounting structure according to the present disclosure.

As illustrated in Fig. 1, an electric vehicle 1 includes paired side frames 4 and 5, namely, a left side frame 4 and a right side frame 5 separated in the vehicle width direction. The electric vehicle 1 further includes a battery case 7 disposed between the paired side frames 4 and 5. The battery case 7 is a case for storing a driving battery that supplies power to a traction motor (not illustrated) of the electric vehicle 1. The battery case 7 includes a case formed in a rectangular parallelepiped shape having an upper opened portion, and a lid body 8 sealing the upper opened portion of the battery case 7. The driving battery is configured by electrically connecting battery cells Db each having a substantially rectangular parallelepiped shape and same specification. For convenience of description, the driving battery is also referred to as a driving battery Db as appropriate.

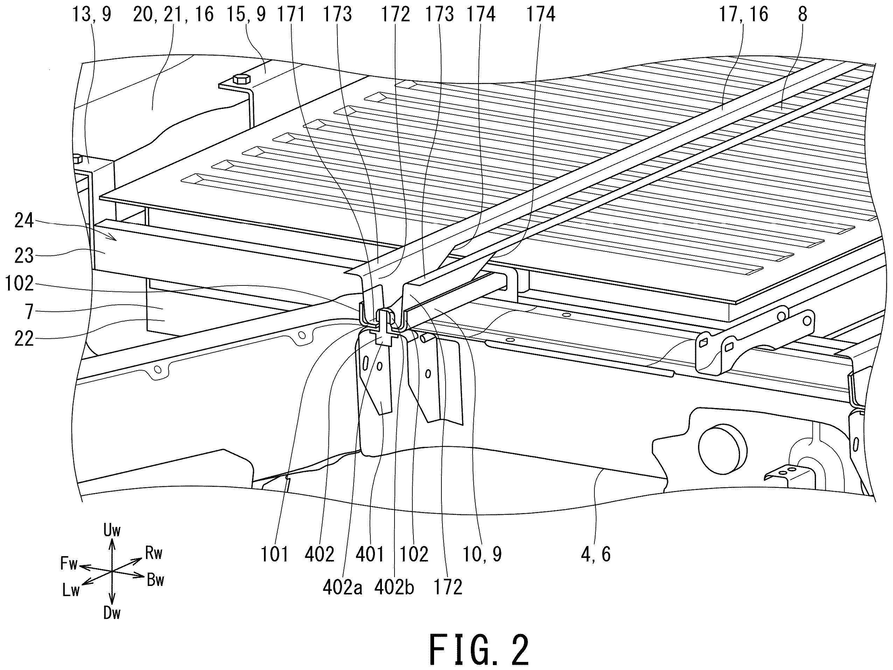

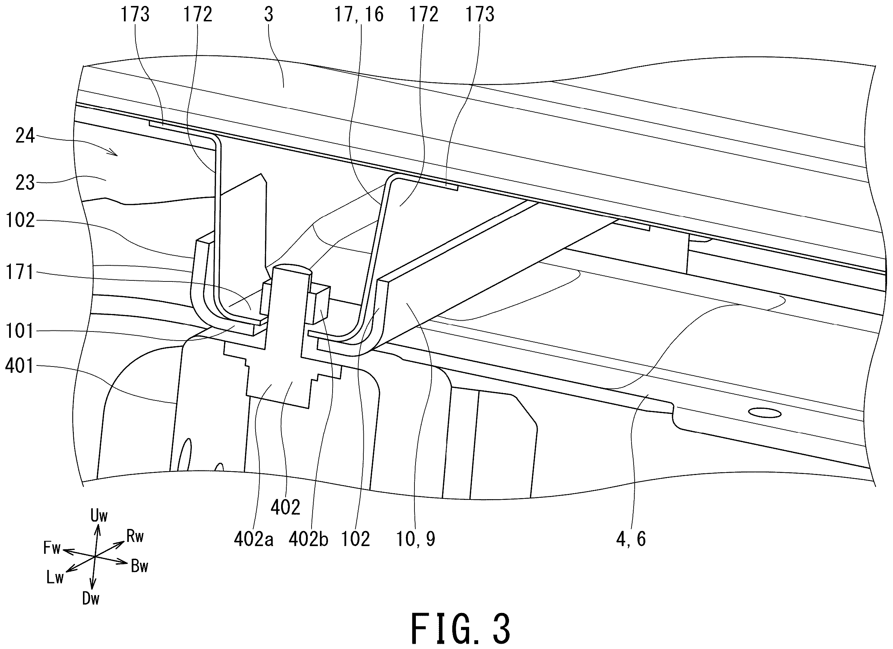

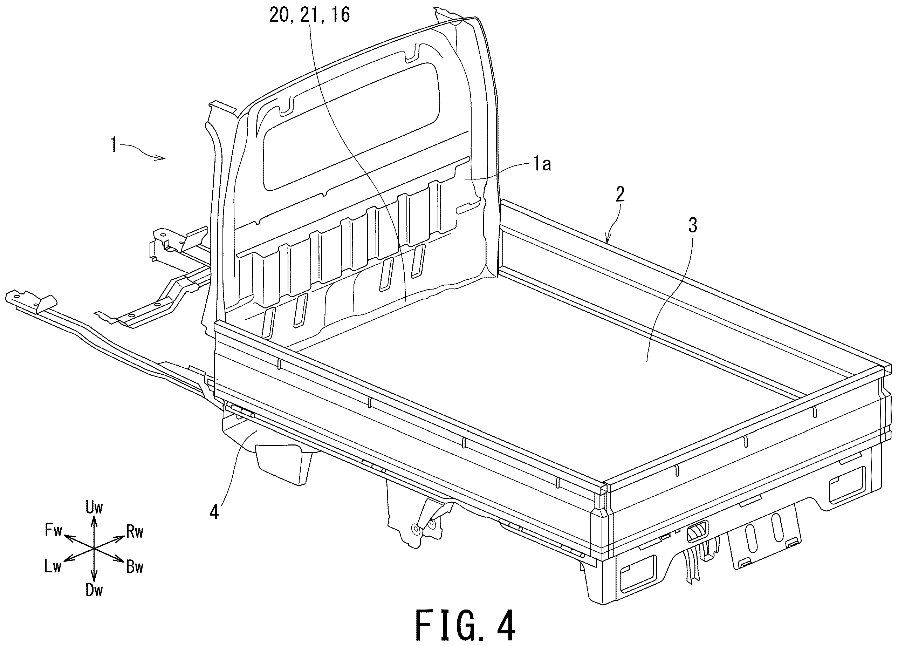

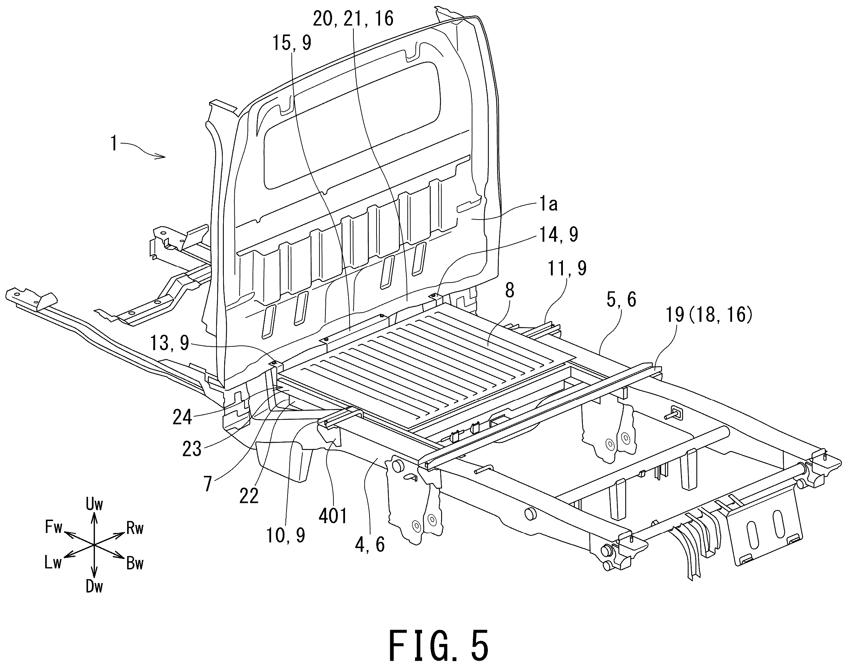

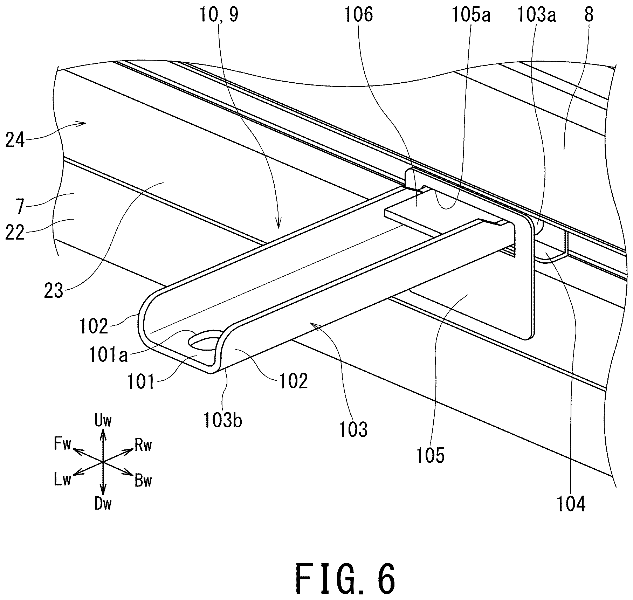

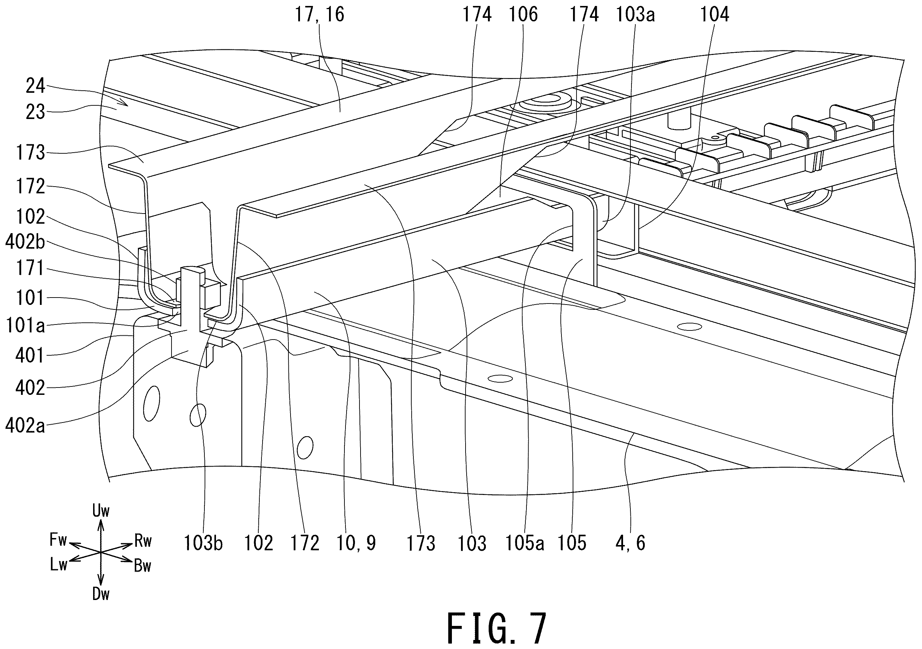

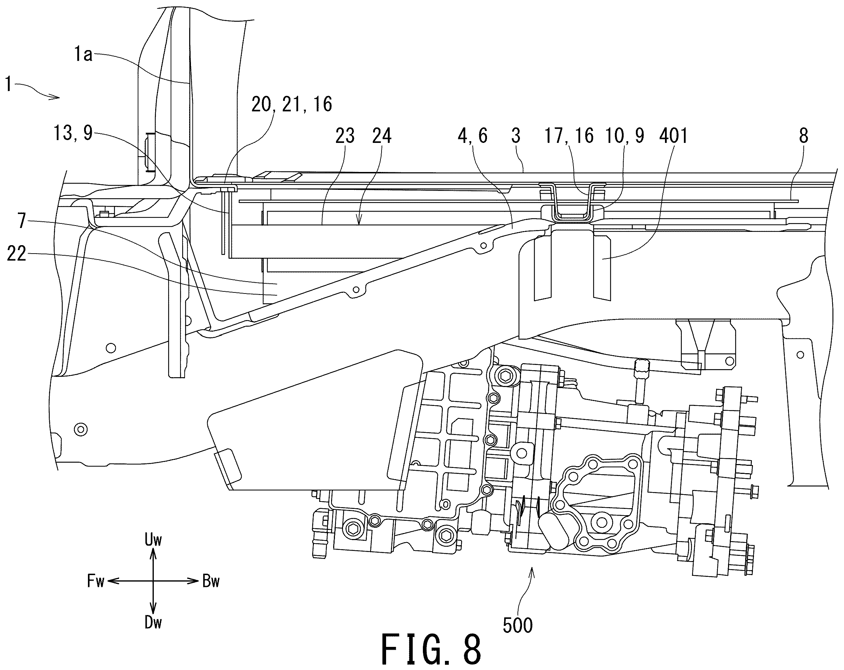

Fig. 2 is a diagram illustrating a state where a bracket for supporting the battery case is fixed to one of the side frames in the electric vehicle illustrated in Fig. 1. Fig. 3 is a partial enlarged view illustrating a mounting form of the bracket illustrated in Fig. 2. Fig. 4 is a partial perspective view illustrating the electric vehicle illustrated in Fig. 1 in a state where a deck floor panel of a deck is mounted. Fig. 5 is a perspective view illustrating arrangement of brackets for supporting the battery case in the electric vehicle illustrated in Fig. 1. The electric vehicle in the example is a truck including the deck. Fig. 1, Fig. 2, and Fig. 5 each illustrate a state where the deck floor panel illustrated in Fig. 4 is removed. Fig. 6 is an enlarged view illustrating one of the brackets illustrated in Fig. 5. Fig. 7 is a diagram illustrating the mounting form of the bracket illustrated in Fig. 3 in a state where the deck floor panel is removed. Fig. 8 is a diagram illustrating the electric vehicle illustrated in Fig. 1 in side view.

The electric vehicle according to the present disclosure is not limited in a body type such as a sedan type, a wagon type, and a van type, and in positional relationship between a traveling driving apparatus and the cabin, but the electric vehicle 1 in the illustrated example is a flat body-type small truck including a deck 2 illustrated in Fig. 4. In the drawings according to the present disclosure, illustration of the entire cabin of the electric vehicle 1 is omitted, but a back panel 1a provided behind the cabin is illustrated in Fig. 1, Fig. 4, Fig. 5 and Fig. 8. A deck floor panel 3 of the deck 2 of the electric vehicle 1 more generally corresponds to a floor member. The left side frame 4 and the right side frame 5 that are the paired side frames extending in the front-back direction of the electric vehicle 1 are provided below the deck floor panel 3. The left side frame 4 and the right side frame 5 are collectively referred to as side frames 6 as appropriate. As illustrated in Fig. 8, the battery case 7 is disposed directly below the deck floor panel 3 of the electric vehicle 1, and a driving apparatus 500 including the traction motor is disposed below the battery case 7.

The electric vehicle 1 according to the present disclosure includes a plurality of brackets 9 for supporting the battery case 7 between the left side frame 4 and the right side frame 5 in plan view. The brackets 9 include a left side bracket 10, a right side bracket 11, and front brackets 12. The left side bracket 10 overhangs from the battery case 7 side to the left side in the vehicle width direction of the electric vehicle 1. The right side bracket 11 overhangs from the battery case 7 side to the right side in the vehicle width direction of the electric vehicle 1. The front brackets 12 overhang from the battery case 7 side toward the cabin in plan view of the electric vehicle 1. The front brackets 12 according to the embodiment include three brackets, namely, a front-left bracket 13, a front-right bracket 14, and a front-center bracket 15. The front-left bracket 13 is provided on the left side in the vehicle width direction. The front-right bracket 14 is provided on the right side in the vehicle width direction. The front-center bracket 15 is provided between the front-left bracket 13 and the front-right bracket 14.

In the battery case mounting structure according to the present disclosure, the plurality of brackets 9 disposed at positions distributed in the vehicle width direction and on the front side in the front-back direction supports the battery case 7. Therefore, the battery case mounting structure can distribute a load to the plurality of brackets 9 and appropriately maintain a spatial posture of the battery case 7 that stores the driving battery as a heavy object.

The electric vehicle 1 according to the present disclosure includes a plurality of cross members 16 that are laid between the left side frame 4 and the right side frame 5 in the vehicle width direction and support the deck floor panel 3 from below. Each of the plurality of cross members 16 is a plate member having an inverted hat shape as viewed in the vehicle width direction. The cross members 16 include an on-case cross member 17 and two back side cross members 18. The on-case cross member 17 is disposed so as to straddle the battery case 7. The two back side cross members 18 are disposed on a back side of the battery case 7. The plurality of back side cross members 18 and the on-case cross member 17 extend in parallel in plan view of the electric vehicle 1. Reinforcing brackets 19 each having a substantially U-shape as viewed in the vehicle width direction are mounted to lower sides of the respective back side cross members 18 each having the inverted hat shape, along the substantially entire widths of the back side cross members 18.

On the other hand, the back panel 1a includes a supporting portion 20 that is provided so as to be bent backward from a lower part of the back panel 1a. The supporting portion 20 is positioned on the front side of the battery case 7, extends in the vehicle width direction, and supports a front edge part of the deck floor panel 3. The supporting portion 20 also functions as the cross member 16 that extends in the vehicle width direction, is laid between the left side frame 4 and the right side frame 5, and supports the deck floor panel 3 from below. Thus, in the present disclosure, the supporting portion 20 is also referred to as a front side cross member 21.

Since the supporting portion 20 supporting the front edge part of the deck floor panel 3 also functions as the front side cross member 21, it is possible to reduce the number of members and to contribute to weight reduction of the electric vehicle 1.

The battery case mounting structure includes a holding member 23. The holding member 23 is interposed between each of the brackets 9 and the battery case 7, and holds the position of the battery case 7. The holding member 23 is a hollow square member made of metal. Each of the brackets 9 has one end coupled to the holding member 23. In a case where the brackets 9 (10, 11, 13, 14, and 15) are directly coupled to the battery case 7 that stores the driving battery as a heavy object, it is necessary for the battery case 7 to have a thick plate thickness and extremely high rigidity, which leads to increase in weight of the electric vehicle 1.

The battery case 7 according to the present disclosure is configured to have a relatively light weight because the battery case 7 according to the present disclosure is made of thin plates. On the other hand, since the holding member 23 is a hollow square member, the holding member 23 has a relatively light weight and is excellent in bending rigidity. Such a holding member 23 is interposed between each of the brackets 9 (10, 11, 13, 14, and 15) and the battery case 7 to support the battery case 7. As a result, the battery case 7 is sufficiently supported by the brackets 9 (10, 11, 13, 14, and 15) while increase in weight is avoided.

The holding member 23 includes a frame-shaped portion 24 that is formed so as to surround an outer peripheral surface 22 of the battery case 7 having a rectangular shape in plan view of the electric vehicle 1. The outer peripheral surface 22 of the battery case 7 is stored inside the frame-shaped portion 24 of the holding member 23, and is fixed by spot welding.

The left side bracket 10 and the right side bracket 11, as a side bracket, the mounting forms thereof, and the on-case cross member 17 are described in detail mainly with reference to Fig. 2, Fig. 3, Fig. 6, and Fig. 7. Both the left side bracket 10 and the right side bracket 11 have a similar configuration, and the right side bracket 11 and the mounting form thereof are similar to the left side bracket 10 and the mounting form thereof. Therefore, the left side bracket 10 is described as a representative.

The left side bracket 10 includes a supporting bracket portion 103, a coupling bracket portion 104, a damping bracket portion 105, and a pressure receiving member 106. Each of the left side bracket 10, the supporting bracket portion 103, the coupling bracket portion 104, the damping bracket portion 105, and the pressure receiving member 106 is, for example, a shaped product made of a plate material. The supporting bracket portion 103 is made of a metal plate bent in a substantially U-shape as viewed in the vehicle width direction, and includes a bottom plate part 101 and paired side plate parts 102 standing from respective sides of the bottom plate part 101. One end of the supporting bracket portion 103 is a coupling end 103a coupled to the holding member 23 through the coupling bracket portion 104, and the other end is a supported end 103b supported on the left side frame 4.

The damping bracket portion 105 is a metal plate having an opening 105a. Each of the paired side plate parts 102 of the supporting bracket portion 103 has a part thinned in an outer shape. The parts thinned in the outer shape of the paired side plate parts 102 are disposed in the opening 105a of the damping bracket portion 105. In this state, the damping bracket portion 105 is coupled to the holding member 23. As a result, vibration of the supporting bracket portion 103 is damped by an inner peripheral surface of the opening 105a of the damping bracket portion 105. The pressure receiving member 106 has a plate shape, and is coupled to upper edges of the parts inserted into the opening 105a, of the paired side plate parts 102 of the supporting bracket portion 103.

The pressure receiving member 106 is positioned above the bottom plate part 101 and is parallel to the bottom plate part 101. The pressure receiving member 106 effectively expands a contact area of a portion of the supporting bracket portion 103 coming into contact with the inner peripheral surface of the opening 105a of the damping bracket portion 105, and alleviates local concentration of stress on the contact portion. As a result, both the supporting bracket portion 103 and the damping bracket portion 105 are suppressed in distortion at the contact portion, and are excellent in durability.

The on-case cross member 17 is made of a plate member bent in an inverted hat shape as viewed in the vehicle width direction, and includes a bottom plate part 171 and paired side plate parts 172 standing from respective sides of the bottom plate part 171. Upper ends of the paired side plate parts 172 are bent in opposite directions to form bearing parts 173 extending along a lower surface of the deck floor panel 3. The on-case cross member 17 is a floor supporting member that supports the deck floor panel 3 as the floor member on the left side frame 4 by the bearing parts 173.

The on-case cross member 17 includes a clearance part 174 at a portion where the on-case cross member 17 faces the lid body 8 at the upper part of the battery case 7. The clearance part 174 is provided to avoid contact of the battery case 7 and the lid body 8 with the on-case cross member 17. In the clearance part 174, the bottom plate part 171 is removed, and each of the side plate parts 172 has a shape recessed upward from a lower side over a portion corresponding to the entire width of the lid body 8.

The left side bracket 10 is fixed to the left side frame 4 in such a manner that the bottom plate part 101 of the supporting bracket portion 103 is sandwiched between an upper surface of the left side frame 4 and a lower surface of the bottom plate part 171 of the on-case cross member 17. In other words, the left side bracket 10 is fixed to the left side frame 4 by being sandwiched between the left side frame 4 and a floor supporting member for supporting the floor member 3 by the left side frame 4.

The left side frame 4 includes a mounting member 401 that is provided on a left outside surface in the vehicle width direction and protrudes to a left outside. The left side bracket 10 is fixed in such a manner that the bottom plate part 101 of the left side bracket 10 is sandwiched between an upper surface of the mounting member 401 and the lower surface of the bottom plate part 171 of the on-case cross member 17, and the mounting member 401, the on-case cross member 17, and the left side bracket 10 are fastened together by a fastening member 402. The fastening member 402 is, for example, a combination of a bolt 402a and a nut 402b fastened to the bolt 402a. A fastening hole 101a is provided on the supported end 103b side of the bottom plate part 101 of the left side bracket 10. The bolt 402a is inserted into the fastening hole 101a, and the above-described fastening is performed by the nut 402b.

The on-case cross member 17, the back side cross members 18, and the front side cross member 21 are laid between the paired side frames 6 to form a ladder frame structure that looks like a ladder as a whole. The on-case cross member 17, the back side cross members 18, and the front side cross member 21 are referred to as a plurality of cross members 16 in the ladder frame structure.

The plurality of cross members 16 hold relative positions of the paired side frames 6. In addition, the on-case cross member 17 supports the floor member (deck floor panel 3) from below. Further, the bottom plate part 101 of the side bracket (left side bracket 10) is sandwiched between the lower surface of the bottom plate part 171 and the upper surface of the mounting member 401, to fix the side bracket onto the side frames 6. As described above, the on-case cross member 17 has the plurality of functions, which makes it possible to suppress increase of the number of members relating to the mounting structure of the battery case 7, and to achieve reduction in size and weight of the electric vehicle 1.

Fig. 8 illustrates a flat body-type small truck that is the electric vehicle 1. The battery case 7 is disposed directly below the deck floor panel 3 of the electric vehicle 1, and the driving apparatus 500 including the traction motor is disposed below the battery case 7. The driving apparatus 500 is a traveling power source of the electric vehicle 1 that integrally includes the traction motor, an inverter, and the like. A minimum road clearance of the electric vehicle 1 depends on a lowest position of the driving apparatus 500 or an accessary part thereof in the up-down direction.

As described above, in the electric vehicle 1 according to the present disclosure, the battery case 7 can be supported at a relatively high position directly below the deck floor panel 3. Therefore, the driving apparatus 500 positioned below the battery case 7 is also avoided from being unnecessarily located at a low position in the up-down direction of the electric vehicle 1, and a required minimum road clearance is secured. Further, the driving apparatus 500 is easily accessible from a lower side of the electric vehicle 1 and is easily maintained.

A configuration in each aspect of the battery case mounting structure according to the present disclosure, and action and effects thereof are summarized below.
(1) A battery case mounting structure according to the present disclosure includes: paired side frames 6 (left side frame 4 and right side frame 5) extending in a front-back direction below a floor member (deck floor panel 3) of an electric vehicle 1; a floor supporting member (on-case cross member 17) configured to support the floor member to the paired side frames 6; a battery case 7 of a driving battery supplying power to a traction motor of the electric vehicle 1; and a plurality of side brackets (left side bracket 10 and right side bracket 11) configured to support the battery case 7 between the paired side frames 6, in which the side brackets include a side bracket (left side bracket 10) fixed to one (left side frame 4) of the paired side frames 6 by being sandwiched between the one side frame (left side frame 4) and the floor supporting member (on-case cross member 17), and a side bracket (right side bracket 11) fixed to another (right side frame 5) of the paired side frames 6 by being sandwiched between the other side frame (right side frame 5) and the floor supporting member (on-case cross member 17).

In the battery case mounting structure according to (1) described above, the side brackets (left side bracket 10 and right side bracket 11) are fixed onto the side frames 6 by being sandwiched between upper surfaces of the side frames 6 and a lower surface of the floor supporting member (on-case cross member 17). Therefore, when the battery case 7 is sported between the paired side frames 6 such that an upper surface of a lid body 8 sealing an upper opened portion of the battery case 7 is positioned below the floor member (deck floor panel 3), the side brackets (left side bracket 10 and right side bracket 11) supporting the battery case 7 are not positioned below the side frames 6. Therefore, in the up-down direction, the battery case 7 supported by the side brackets is avoided from being unnecessarily located at a low position. Thus, the minimum road clearance that depends on the lowest position of the driving apparatus 500 disposed below the battery case 7 or an accessary part of the driving apparatus 500 in the up-down direction can be sufficiently secured.

(2) In one aspect of the battery case mounting structure according to (1) described above, the floor supporting member is a cross member 16 (17, 18, 19, or 21) extending in a vehicle width direction of the electric vehicle 1 and laid between the paired side frames 6.

In the battery case mounting structure according to (2) described above, the on-case cross member 17 serving as the floor supporting member, the back side cross members 18, and the front side cross member 21 constitute the plurality of cross members 16 of a ladder frame, and hold the relative positions of the paired side frames 6. Further, the on-case cross member 17 supports the floor member (deck floor panel 3) from below. The cross members 16 (17, 18, 19, and 21) carry the plurality of functions, which makes it possible to reduce the number of parts relating to the battery case mounting structure, and to achieve downsizing and weight reduction of the electric vehicle 1.

(3) One aspect of the battery case mounting structure according to (1) described above further includes a holding member 23 interposed between the side brackets (left side bracket 10 and right side bracket 11) and (outer peripheral surface 22 of) the battery case 7, and configured to hold the battery case 7, in which each of the side brackets (left side bracket 10 and right side bracket 11) has one end coupled to the holding member 23.

In the battery case mounting structure according to (3) described above, the holding member 23 is interposed between the battery case 7 and the side brackets without directly coupling the side brackets (left side bracket 10 and right side bracket 11) to the battery case 7 that stores the driving battery as a heavy object. Therefore, rigidity required for coupling portions with the side brackets (left side bracket 10 and right side bracket 11) is borne by the holding member 23, which makes it possible to reduce a weight of the battery case 7 itself without increasing rigidity of the battery case 7 itself, and to avoid the weight of the electric vehicle 1 from being increased.

(4) In one aspect of the battery case mounting structure according to (1) described above, the electric vehicle 1 is a flat body-type small truck including a cabin, a deck 2 disposed on a back side of the cabin, and the traction motor disposed below a floor member of the deck 2, and the floor member is a deck floor panel 3 of the deck 2.

In the battery case mounting structure according to (4) described above, the battery case 7 that stores the driving battery of the traction motor is fixed at a relatively high position because of the configuration according to (1) described above. Therefore, in a case where the electric vehicle 1 is a flat body-type small truck in which the traction motor is disposed below the deck 2 on the back side of the cabin, a height of the deck floor panel 3 of the deck is suppressed to low while a required minimum road clearance is secured, and an excellent loading property as the small truck is achieved.

(5) One aspect of the battery case mounting structure according to (4) described above further includes front brackets 12 (13, 14, and 15) overhanging from the battery case 7 toward the cabin and fixed to a lower part of a back panel (1a) of the cabin.

In one aspect of the battery case mounting structure according to (5) described above, the battery case 7 that stores the driving battery Db as a heavy object is supported on the back panel 1a side of the cabin through the front brackets 12 (13, 14, and 15). Therefore, a load applied to the brackets 9 (10, 11, 13, 14, and 15) necessary for supporting the battery case 7 is appropriately distributed. As a result, each of the brackets 9 (10, 11, 13, 14, and 15) can be made relatively light in weight, and the brackets 9 having the light weight and appropriate rigidity can be realized as a whole.

(6) In one aspect of the battery case mounting structure according to (4) or (5) described above, the battery case 7 is disposed directly below the deck floor panel 3 in the up-down direction of the electric vehicle 1, and a driving apparatus 500 including the traction motor is disposed below the battery case 7.

In one aspect of the battery case mounting structure according to (6) described above, the battery case 7 is supported at a relatively high position directly below the deck floor panel 3 because of the configuration according to (1) described above. The driving apparatus 500 positioned below the battery case 7 is also avoided from being unnecessarily located at a low position in the up-down direction of the electric vehicle 1, and a required minimum road clearance is secured. Further, the driving apparatus 500 is easily accessible from a lower side of the electric vehicle 1 and therefore, is easily maintained.

### REFERENCE SIGNS LIST

- Db: Battery (driving battery)
- 1: Electric vehicle
- 1a: Back panel
- 2: Deck
- 3: Deck floor panel (floor member)
- 4: Left side frame
- 5: Right side frame
- 6: Side frame (general term of side frames 4 and 5)
- 7: Battery case
- 8: Lid body
- 9: Bracket (general term of brackets 10, 11, and 12)
- 10: Left side bracket
- 11: Right side bracket
- 12: Front bracket (general term of brackets 13, 14, and 15)
- 13: Front-left bracket
- 14: Front-right bracket
- 15: Front-center bracket
- 16: Cross member (general term of cross members 17, 18, 19, and 21)
- 17: On-case cross member
- 18: Back side cross member
- 19: Reinforcing bracket
- 20: Supporting portion (front side cross member)
- 21: Front side cross member
- 22: Outer peripheral surface
- 23: Holding member
- 24: Frame-shaped portion
- 101: Bottom plate part
- 101a: Fastening hole
- 102: Side plate part
- 103: Supporting bracket portion
- 103a: Coupling end
- 103b: Supported end
- 104: Coupling bracket portion
- 105: Damping bracket portion
- 105a: Opening
- 106: Pressure receiving member
- 171: Bottom plate part
- 172: Side plate part
- 173: Bearing part
- 174: Clearance part
- 401: Mounting member
- 402: Fastening member
- 402a: Bolt
- 402b: Nut
- 500: Driving apparatus

## Claims

1. A battery case mounting structure, comprising:
paired side frames extending in a front-back direction below a floor member of an electric vehicle;
a floor supporting member configured to support the floor member to the paired side frames;
a battery case of a driving battery supplying power to a traction motor of the electric vehicle; and
a plurality of side brackets configured to support the battery case between the paired side frames, wherein
the side brackets include a side bracket fixed to one of the paired side frames by being sandwiched between the one side frame and the floor supporting member, and a side bracket fixed to another of the paired side frames by being sandwiched between the other side frame and the floor supporting member.

2. The battery case mounting structure according to claim 1, wherein the floor supporting member is a cross member extending in a vehicle width direction of the electric vehicle and laid between the paired side frames.

3. The battery case mounting structure according to claim 1, further comprising a holding member interposed between the side brackets and the battery case, and configured to hold the battery case, wherein
each of the side brackets has one end coupled to the holding member.

4. The battery case mounting structure according to claim 1, wherein
the electric vehicle is a flat body-type small truck including a cabin, a deck disposed on a back side of the cabin, and the traction motor disposed below a floor member of the deck, and
the floor member is a deck floor panel of the deck.

5. The battery case mounting structure according to claim 4, further comprising front brackets overhanging from the battery case toward the cabin and fixed to a lower part of a back panel of the cabin.

6. The battery case mounting structure according to claim 4 or 5, wherein
the battery case is disposed directly below the deck floor panel in an up-down direction of the electric vehicle, and
a driving apparatus including the traction motor is disposed below the battery case.
